# EUROPEAN PATENT APPLICATION

(11) **EP 3 312 126 A1**
(43) Date of publication of application: **25.04.2018**
(21) Application number: 17197334.0
(22) Date of filing: 19.10.2017
(51) Int. Cl.: B66B 7/12

(54) **AUTOMATIC MARKING SYSTEM**

(30) Priority: 19.10.2016 US 201615297415
(71) Applicant: Otis Elevator Company, Farmington, Connecticut 06032 (US)
(72) Inventor: Miyajima, Hiromitsu, Shibayama-machi, 289-1624 (JP); Onoda, Ryuji, Shibayama-machi, 289-1624 (JP); Takeuchi, Takashi, Shibayama-machi, 289-1624 (JP); Kato, Mitsuru, Shibayama-machi, 289-1624 (JP); Tanaka, Hirotomo, Shibayama-machi, 289-1624 (JP)
(74) Representative: Power, Philippa Louise

(57) **Abstract**

An automatic marking system (8) is provided which comprises a rope inspecting device (10) including a camera (15) and an image processor (14) and a rope marking device (17) for providing a mark on the rope in response to the image processor (14) detecting a defect on the rope. The mark distinguishes the type or level of the defect. The rope may be a hoisting rope (3) of an elevator device. The defect may include at least one of reduced diameter, rust, wire brakeage and strand brakeage of the hoisting rope (3).

## Description

### BACKGROUND

This invention relates to an automatic marking system for automatically providing a mark or tape on hoisting ropes depending on the type and/or level of a defect detected on the rope.

Hoisting ropes for elevators are used to provide the necessary lifting forces and traction forces for moving an elevator car. Hoisting ropes are typically formed by weaving steel wires together to form strands and then weaving the strands around a central core.

In order to ensure the operational reliability of hoisting ropes, the ropes must be checked on a regular basis. According to the prior art, such checks may comprise visual checks by service personnel in a machine room while continuously or intermittently moving the hoisting rope at a low speed. When a defect is found, it will be necessary to visually check the whole circumference of the rope at the location of the defect. Since it is difficult to visually check the whole circumference of the hoisting rope in the machine room, defects are usually marked by chalk or tape. Service personnel will subsequently locate the marks and visually check the marked portions of the rope on top of the elevator car as the elevator moves through the hoistway.

Since detection and marking of defects is preformed manually, it takes a long time to inspect the entire length of the hoisting ropes. Therefore, there is a need for a marking system for detecting and marking defects in a less time consuming way.

### BREIF SUMMARY

According to one embodiment of the invention, an automatic marking system is provided which comprises a rope inspecting device including a camera and an image processor and a rope marking device for providing a mark on the rope in response to the image processor detecting a defect on the rope. The mark distinguishes the type or level of the defect.

Preferably, the rope may be a hoisting rope of an elevator device.

Still more preferably, the defect may include at least one of reduced diameter, rust, wire brakeage and strand brakeage of the hoisting rope.

In any embodiment of the invention, a different color may preferably be used for the mark to distinguish the type of the defect.

In any embodiment of the invention, a different number of markings may preferably be used for the mark to distinguish the level of the defect.

In any embodiment of the invention, the rope marking device may preferably comprise a spray head including at least one set of nozzles.

Still more preferably, the spray head may include a plurality of sets of nozzles, the sets of nozzles longitudinally spaced from one another.

In any embodiment of the invention, the automatic marking system may further comprise a rope taping device for wrapping a tape around the rope in response to the image processor detecting a defect on the rope.

Still more preferably, the rope taping device may comprise a taping sleeve with a C-shaped cross section for receiving the rope, the taping sleeve supporting the tape and adapted to rotate about an axis of rotation.

Still more preferably, the tape may be wrapped around the rope by rotation of the taping sleeve.

According to another embodiment of the invention, an automatic marking system is provided which comprises a rope inspecting device including a camera and an image processor, a rope marking device for providing a mark on the rope in response to the image processor detecting at least one of reduced diameter, rust and wire brakeage of the rope and a rope taping device for wrapping a tape around the rope in response to the image processor detecting strand breakage of the rope. The mark distinguishes the type or level of the defect.

According to a further embodiment of the invention, a method for inspecting a hoisting rope of an elevator is provided which comprises detecting a defect on the hoisting rope by a rope inspecting device, sending a detection signal from the rope inspecting device to a rope marking device and providing a mark on the rope in response to the detection signal. The mark distinguishes the type or level of the defect.

In any embodiment of the invention, the defect may preferably include at least one of reduced diameter, rust, wire brakeage and strand brakeage of the hoisting rope.

In any embodiment of the invention, the method may preferably further comprise: sending a detection signal from the rope inspecting device to a rope taping device; and providing a tape on the rope in response to the detection signal.

### BRIEF DESCRIPTION OF THE DRAWINGS

FIG. 1 is a cross-sectional view of an elevator system.
FIG. 2 is a schematic representation of the automatic marking system of the present invention.
FIG. 3 is a block diagram of the automatic marking system and elevator controller of the present invention.
FIG. 4 shows various levels of diameter reduction and marks corresponding to the level of diameter reduction on a hoisting rope.
FIG. 5 shows various levels of rust formation and marks corresponding to the level of rust formation on a hoisting rope.
FIG. 6 shows various levels of wire breakage and marks corresponding to the level of wire breakage on a hoisting rope.
FIG. 7 shows a hoisting rope with a broken strand and a hoisting rope with a tape wrapped over the broken strand.
FIG. 8 is a schematic view of a marking device of the present invention.
FIG. 9 is a cross sectional view of the marking device of figure 8.
FIG. 10 is a schematic view of another embodiment of a marking device of the present invention.
FIG. 11 is a cross sectional view of the marking device of figure 10.
FIG. 12 is a schematic view of a taping device of the present invention.
FIG. 13 is a side view of the taping device of figure 12.
FIG. 14 shows the taping device of figure 12 moving toward a hoisting rope.
FIG. 15 shows the taping device of figure 12 containing the hoisting rope.
FIG. 16 shows the taping device of figure 12 wrapping a tape around the hoisting rope.
FIG. 17 is a side view of the taping device of figure 12 showing the movement of tape cutters.
FIG. 18 is a flowchart showing the operation of the automatic marking system of the present invention.
FIG. 19 is a flowchart showing the operation of the automatic marking system of the present invention.
FIG. 20 is a flowchart showing the operation of the automatic marking system of the present invention.
FIG. 21 is a flowchart showing the operation of the automatic marking system of the present invention.

The detailed description explains embodiments of the invention, together with advantages and features, by way of example with reference to the drawings.

### DETAILED DESCRIPTION

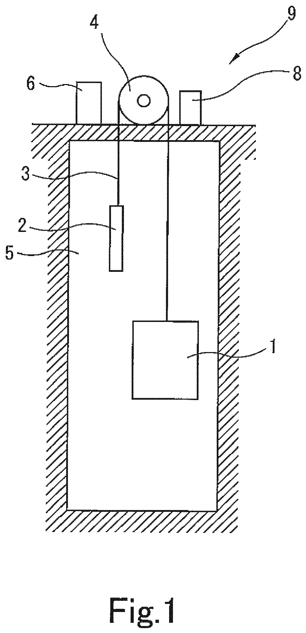

Illustrated in figure 1 is an elevator system having a car 1 which is connected to a counterweight 2 by a plurality of hoisting ropes 3. The ropes 3 extend over a traction sheave 4 that is driven by a machine (not shown). Traction between the sheave 4 and the ropes 3 drives the car 1 and counterweight 2 through a hoistway 5. Operation of the machine is controlled by an elevator controller 6.

Also illustrated in figure 1 is an automatic marking system 8 which automatically provides a mark or tape on the hoisting ropes 3 depending on the type and/or level of defects detected on the ropes 3. The automatic marking system 8 is disposed proximate to the hoisting ropes 3 in a machine room 9 or upper portion of the hoistway 5 in a location where sway of the ropes 3 is minimum.

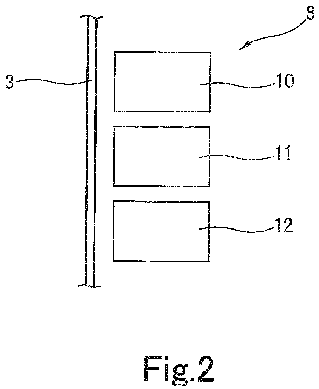

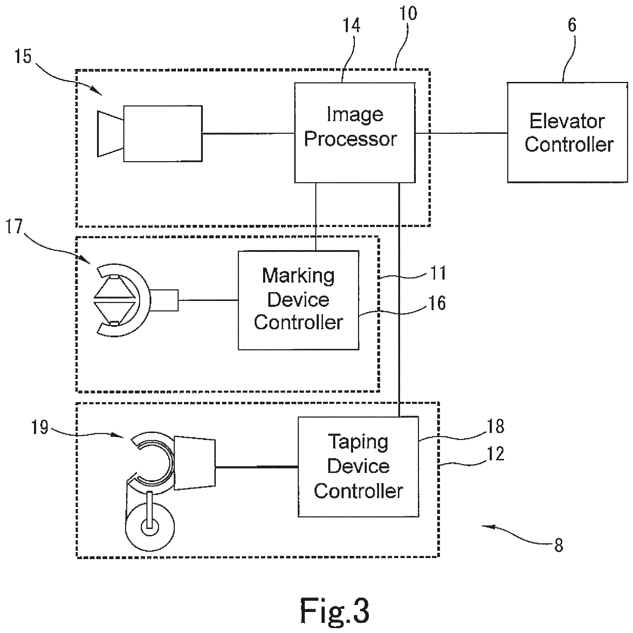

As shown in figures 2 and 3, the automatic marking system 8 comprises a rope inspecting device 10, a rope marking unit 11 and a rope taping unit 12. The rope inspecting device 10 includes an image processor 14 and one or a plurality of cameras 15 for inputting image data of the hoisting ropes 3 to the image processor 14. The rope marking unit 11 includes a marking device controller 16 and a rope marking device 17. The rope taping unit 12 includes a taping device controller 18 and a rope taping device 19.

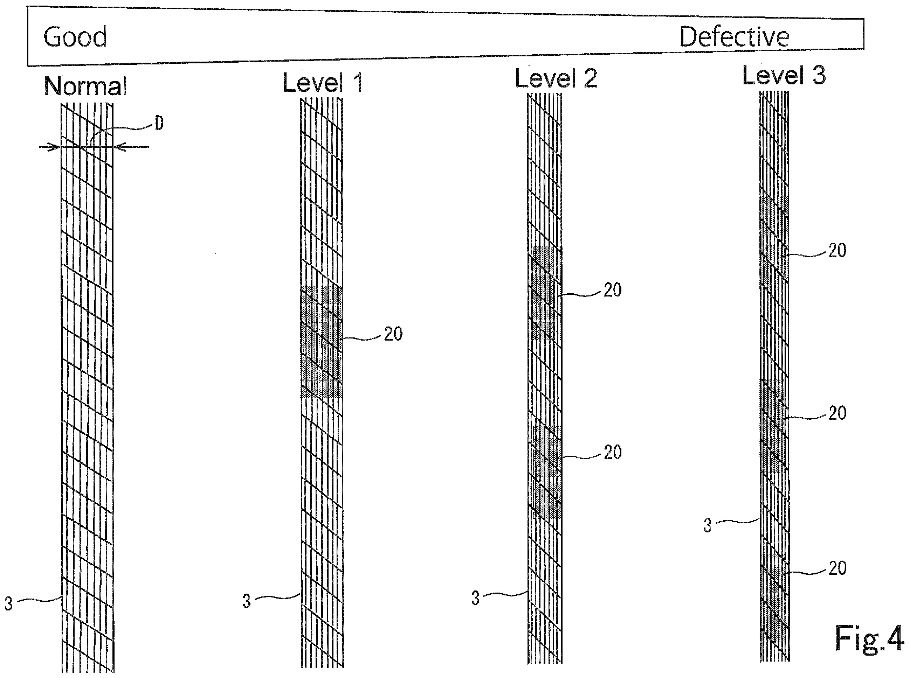

As illustrated in figures 4 to 7, the defect may comprise reduced diameter, rust, wire brakeage or strand brakeage. Figure 4 shows an example of reduced diameter. The diameter (D) of the hoisting rope in a normal condition is in a range D>D1, where D1 is X1% of a nominal diameter (DN) of the hoisting rope. Level 1 corresponds to a condition in which the diameter of the hoisting rope has decreased due to wear or brakeage. D1=> D>D2, where D2 is X2% of DN. Level 2 corresponds to a condition in which the diameter of the hoisting rope has further decreased. D2=> D>D3, where D3 is X3% of DN. Level 3 corresponds to a condition in which the diameter of the hoisting rope has decreased to a minimum level. D3=>D. The following relation holds true for the above percentages X1>X2>X3.

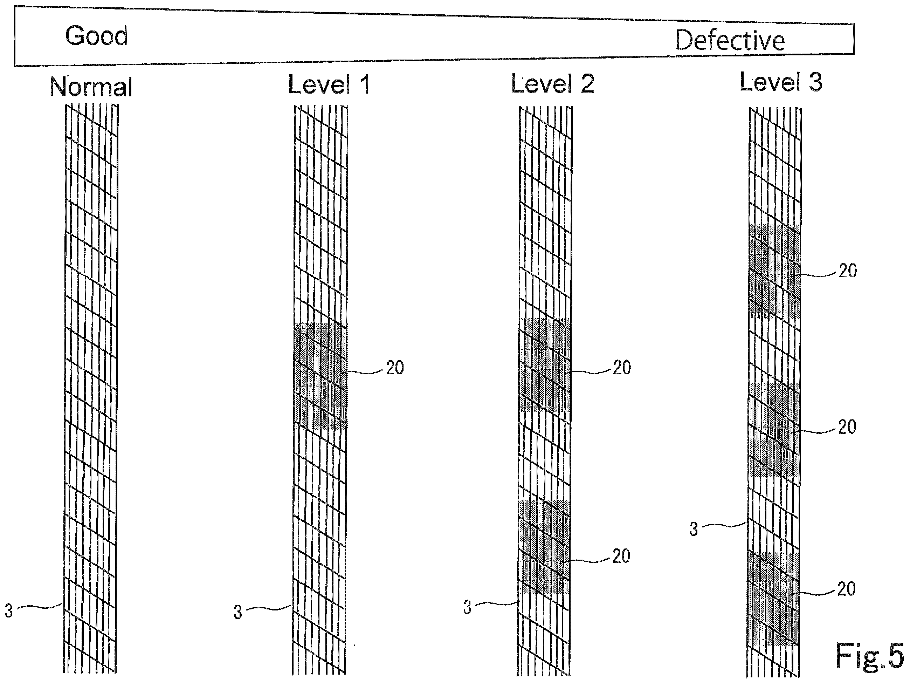

Figure 5 shows an example of rust. In the normal condition, there is 0% of rust area. Level 1 corresponds to a condition in which rust has begun to form around the hoisting rope 3 over an area larger than 0% and equal to or smaller than Y1% of the total surface area of the rope. Level 2 corresponds to a condition in which the rust area has increased to an area larger than Y1% and equal to or smaller than Y2% of the total surface area of the rope. Level 3 corresponds to a condition in which the rust area has increased to a maximum level which is larger than Y2% of the total surface area of the rope. The following relation holds true for the above percentages Y1<Y2.

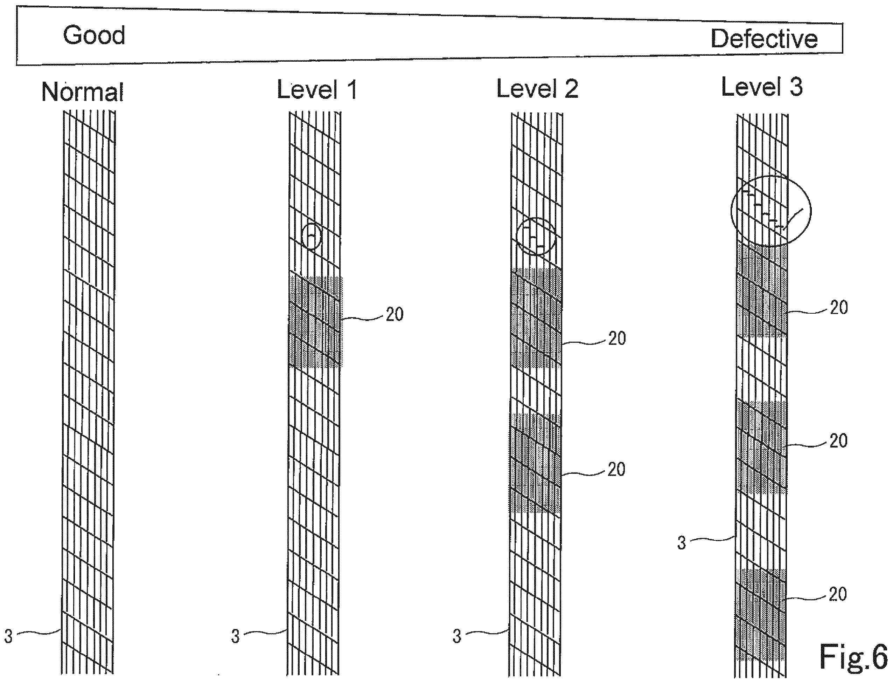

Figure 6 shows an example of wire breakage. In the normal condition there are no broken wires. Level 1 corresponds to a condition in which the number of broken wires is larger than 0 and equal to or smaller than Z1. Level 2 corresponds to a condition in which the number of broken wires has increased to a number larger than Z1 and equal to or smaller than Z2. Level 3 corresponds to a condition in which the number of broken wires has increased to a maximum level which is larger than Z2. The following relation holds true for the above numbers Z1<Z2.

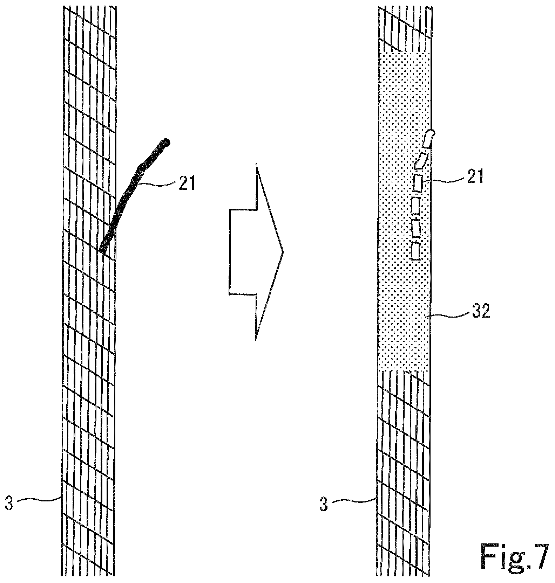

Figure 7 shows an example of a broken strand 21. In a normal condition, there are no broken strands.

According to the present invention, upon inspection of hoisting ropes 3, a Rope Inspection Mode is set by a service personnel via the elevator controller 6. During the Rope Inspection Mode, when reduced diameter, rust, wire brakeage or strand breakage is detected by the image processor 14, the image processor 14 sends a detection signal to the marking device controller 16 and/or the taping device controller 18. The detection signal may contain the type and/or level of the defect.

In the case reduced diameter, rust or wire brakeage is detected, the marking device controller 16 controls the rope marking device 17 in response to the detection signal to immediately paint a mark including one or a plurality of markings 20 on the hoisting rope 3. A different color of paint may be used to distinguish the type of defect. For example, reduced diameter may be marked in red, rust may be marked in yellow and wire breakage may be marked in blue. In order to distinguish the level of the defect, the number of markings 20 may be changed. For example, as shown in figures 4 to 6, one line 20 may be used to indicate level 1, two lines 20 may be used to indicate level 2 and three lines 20 may be used to indicate level 3.

In the case a broken strand 21 is detected, the taping device controller 18 controls the rope taping device 19 in response to the detection signal to wrap a tape 32 around the portion of the hoisting rope 3 having the broken strand 21. The tape may have a color which is different from the color used for marking other defects, for example green, for easy recognition.

In this way, the automatic marking system 8 of the present invention not only detects and marks defects in a less time consuming way but also enables service personnel to visually distinguish the type and level of the defect to promptly take necessary measures. Further, the automatic marking system 8 provides an emergency measure against strand breakage. This is important since strand breakage may cause damage to equipment located in the hoistway 5 or cause emergency stops of the elevator.

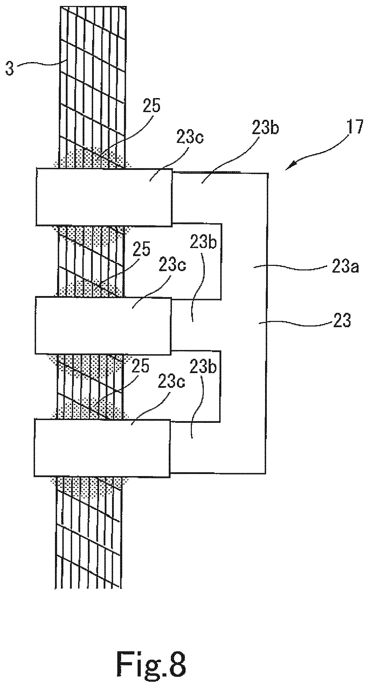

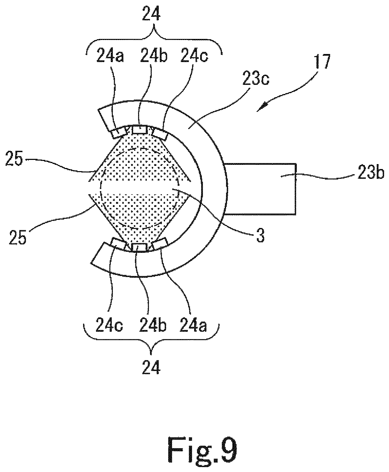

Figures 8 and 9 show a rope marking device 17 which may be used with the present invention. One rope marking device 17 is provided for each hoisting rope 3. The rope marking device 17 comprises a spray head 23 having a body 23a with three arms 23b extending from the body 23a. The three arms 23b are longitudinally spaced from one another. A C-shaped finger 23c is provided on each arm 23b. The body 23a, arms 23b and fingers 23c may be formed integral. The fingers 23c each comprise two sets 24 of three nozzles 24a, 24b, 24c on an inner side thereof near each open end of the U-shape. The nozzles 24a, 24b, 24c are each capable of providing a spray 25 of a different color of paint such as red, yellow and blue to provide a different colored mark on the hoisting rope 3 depending on the type of the defect such as explained above. In this embodiment, the nozzles 24 are positioned opposed to each other so that paint is sprayed over nearly the whole circumference of the hoisting rope 3. The nozzles 24 are also capable of providing one, two or three lines 20 at one time depending on the level of the defect such as explained above.

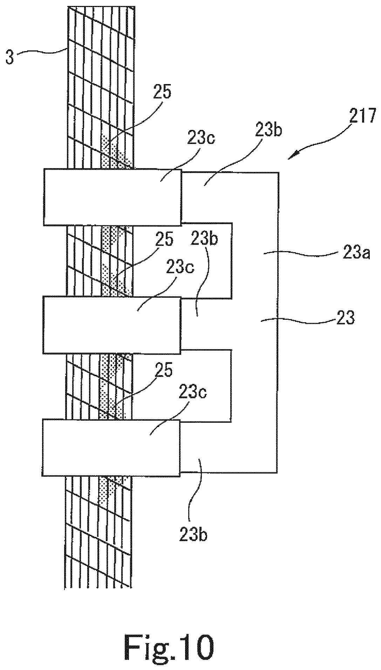

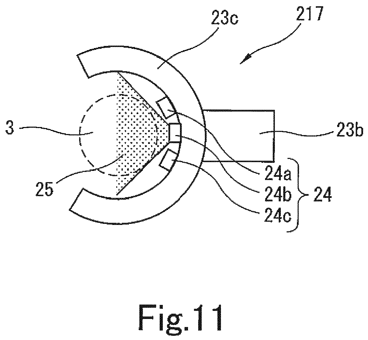

Another embodiment of a rope marking device 217 is shown in figures 10 and 11. In this embodiment, one set of nozzles 24 are provided on each finger 23c in a center portion thereof. Paint will be sprayed over approximately half the circumference of the hoisting rope 3. This embodiment will require maintenance personnel to inspect the hoisting ropes 3 from a painted side of the rope 3.

Upon marking a hoisting rope 3, the elevator is temporarily stopped. The rope marking device 17 is moved toward the hoisting rope 3 such as by an electric motor or hydraulic actuator until the rope 3 is contained in the C-shaped finger 23c such as shown in figures 8 to 11. A spray 25 of paint is sprayed on the hoisting rope 3 through at least one of the nozzles 24. After marking the hoisting rope 3, the rope marking device 17 will be returned to the initial position.

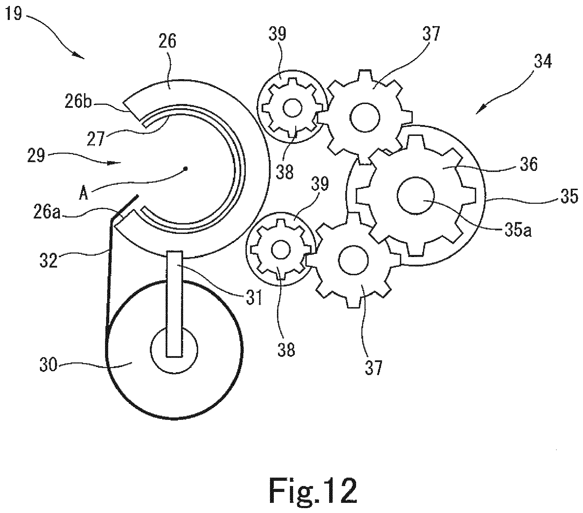

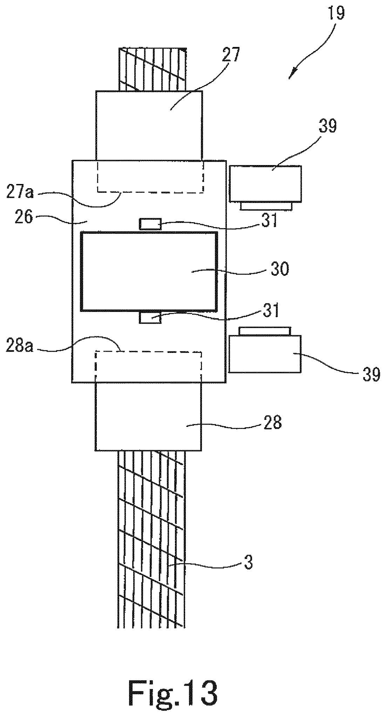

Figures 12 and 13 show a rope taping device 19 which may be used with the present invention. One rope taping device 19 is provided for each hoisting rope 3. The rope taping device 19 comprises a taping sleeve 26 with a C-shaped cross section, upper and lower tubular tape cutters 27, 28 each having a C-shaped cross section, and a driving mechanism 34 for rotating the taping sleeve 26 about an axis of rotation A. The tape cutters 27, 28 and taping sleeve 26 are concentric, with the lower end of the upper tape cutter 27 and the upper end of the lower tape cutter 28 positioned within the taping sleeve 26 to support the taping sleeve 26 as it rotates. The C-shaped cross section of the taping sleeve 26 and tape cutters 27, 28 are aligned in an initial position to define an opening 29 for receiving a hoisting rope 3 such as shown in figure 12.

A roll of tape 30 is supported on the taping sleeve 26 by a bracket 31 so that tape 32 is freely let out as it is wrapped around the hoisting rope 3 by rotational movement of the taping sleeve 26.

The driving mechanism 34 comprises a motor 35 having a motor shaft 35a, a drive gear 36 connected to the motor shaft 35a, intermediate gears 37, 37 which intermesh with the drive gears 36, driven gears 38, 38 which intermesh with the intermediate gears 37, 37 and elastic rollers 39, 39 connected to the driven gears 38, 38. The elastic rollers 39, 39 may be formed of an elastomer such as rubber to frictionally drive the taping sleeve 26 about axis A. As shown in figure 13, two sets of gears may be positioned near the upper and lower ends of the taping sleeve 26.

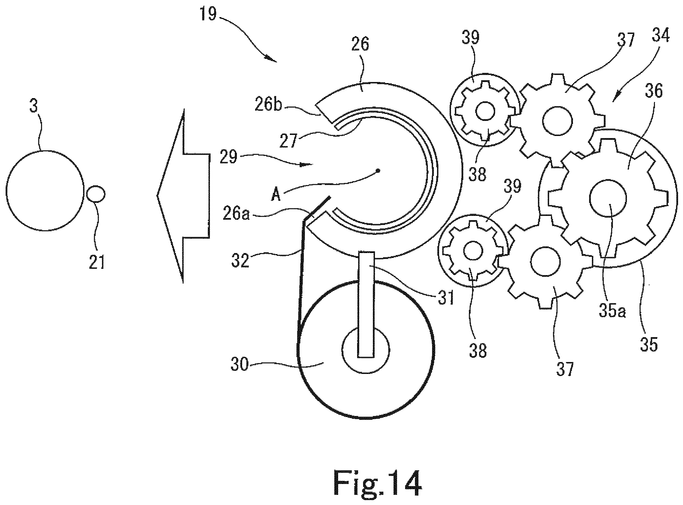

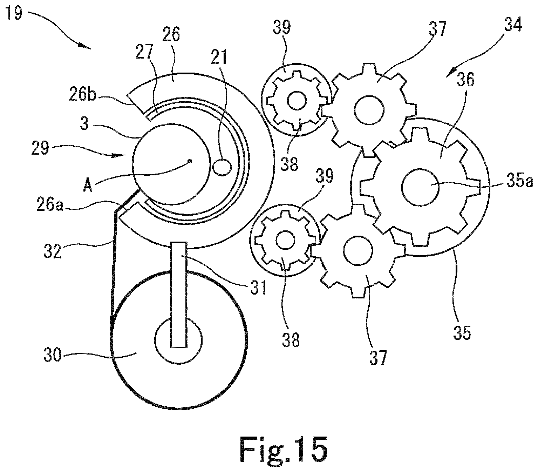

Upon taping a hoisting rope 3, the elevator is temporarily stopped and then moved in an opposite direction so that the portion of the hoisting rope 3 having the broken strand 21 will be positioned at the height of the taping sleeve 26 of the rope taping device 19. Next, the rope taping device 19 is moved toward the hoisting rope 3, as shown in figure 14, such as by an electric motor or hydraulic actuator until the hoisting rope 3 is contained within the C-shaped portion of the taping sleeve 26 and tape cutters 27, 28, as shown in figure 15. The tape 32 is set such that it will adhere to the hoisting rope 3 when the hoisting rope 3 enters the taping sleeve 26.

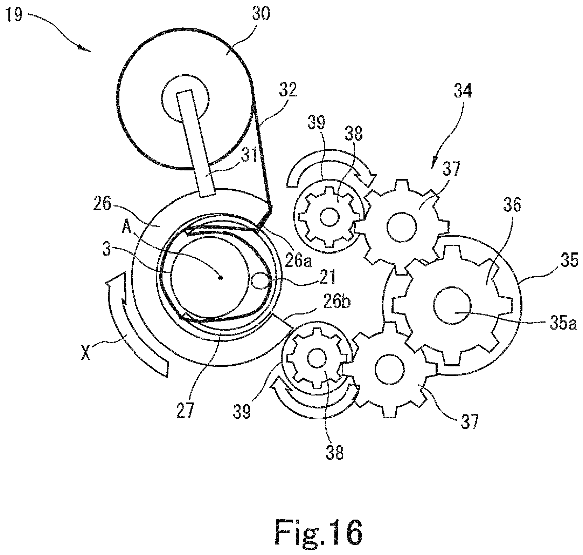

Then, as shown in figure 16, the taping sleeve 26 is rotated by the driving mechanism 34 in a direction X around the axis of rotation A. The leading edge 26a of the taping sleeve 26 pulls out the tape 32 and wraps the tape 32 around the circumference of the hoisting rope 3 to cover the broken strand 21. The tape 32 may be wrapped around the hoisting rope 3 a plurality of times. It is also possible to wrap the tape 32 over a wide portion of the hoisting rope 3 by moving the rope taping device 19 in a vertical direction while taping the rope 3.

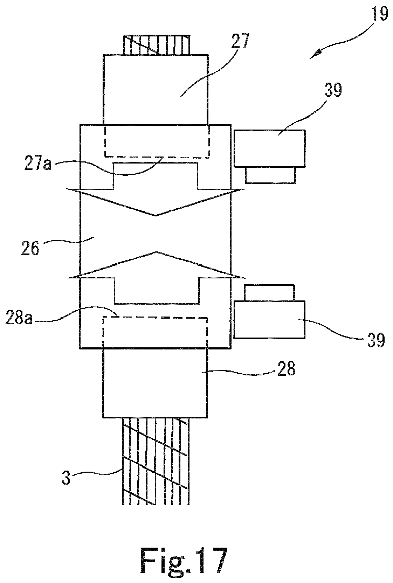

After the tape 32 is wrapped around the hoisting rope 3, the tape 3 may be cut by the tape cutters 27, 28 in the position shown in figure 16. As shown in figure 17, the upper tape cutter 27 may be moved downward and the lower tape cutter 28 may be moved upward. The bottom end 27a of the upper tape cutter 27 and the upper end 28a of the lower tape cutter 28 may comprise tapered cutting edges to facilitate the cutting of tape 32. After taping the hoisting rope 3, the taping device 19 will be returned to the initial position.

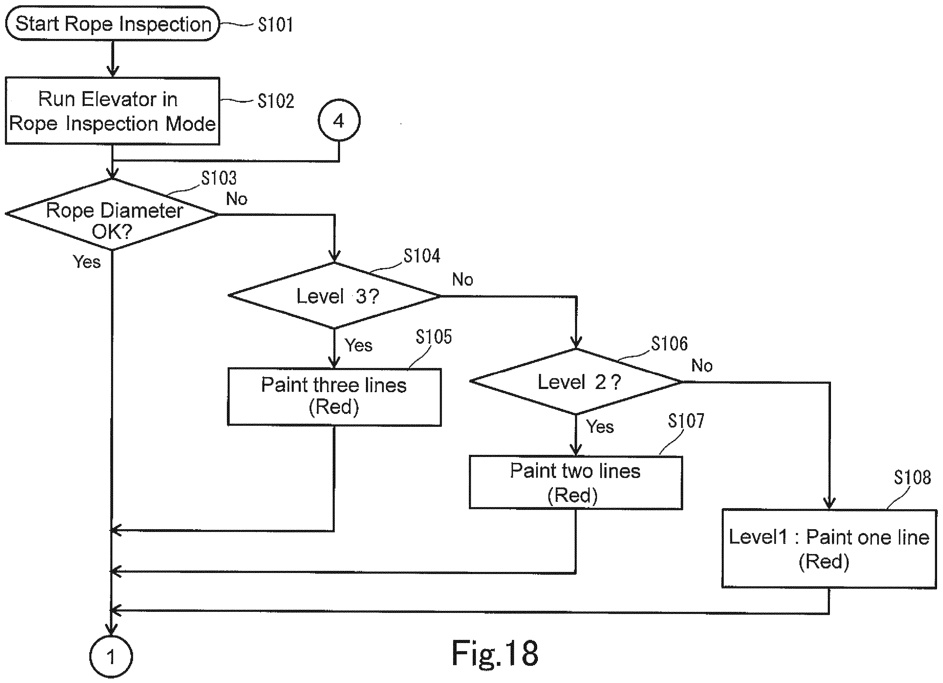

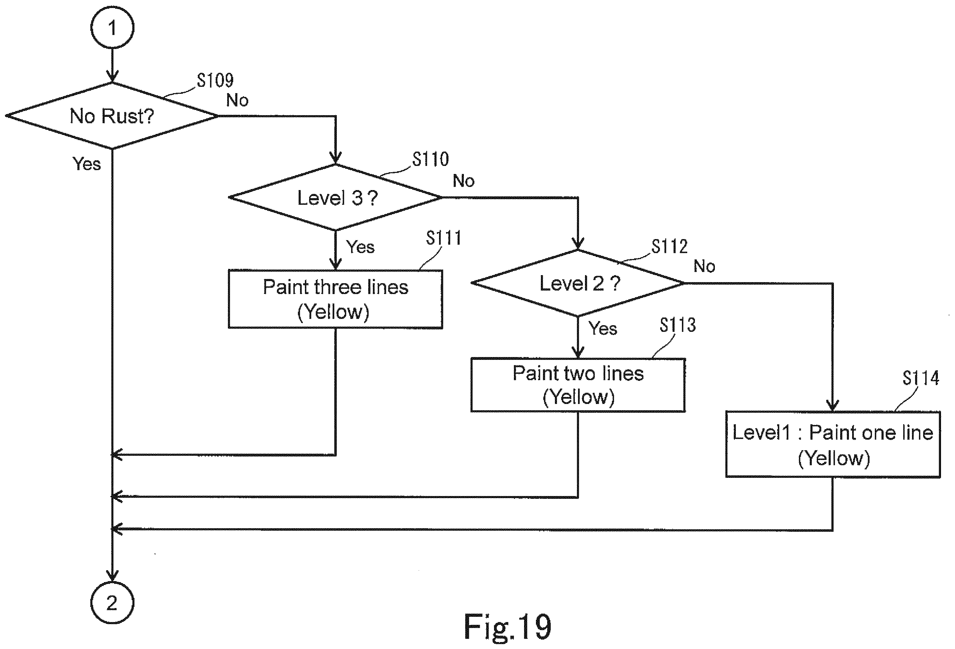

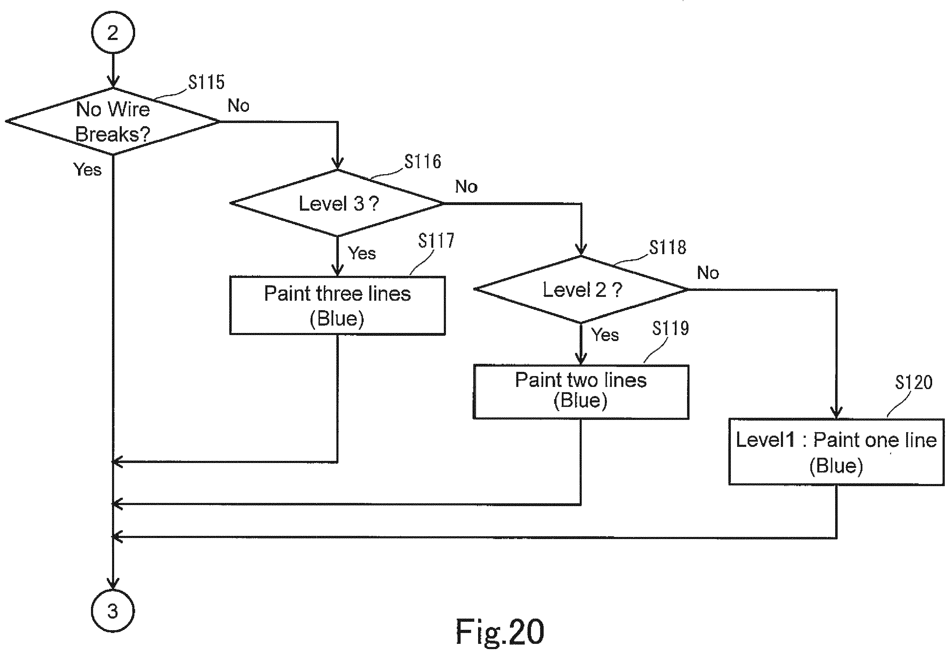

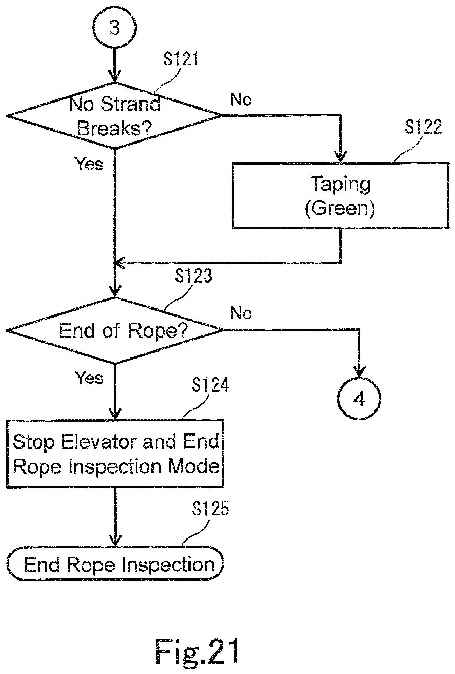

Figures 18 to 21 show how the automatic marking system 8 of the present invention operates. Referring to the flowchart of figure 18, rope inspection is started at step 101. The elevator is run in a Rope Inspection Mode (step 102). First, it is checked if rope diameter is larger than a predetermined threshold D1 (step 103). If so, the program proceeds to step 109 and it is checked if there is any rust on the rope. If there is no rust, then the program proceeds to step 115 and it is checked if there are any wire brakes. If there are no wire brakes, the program proceeds to step 121 and it is checked if there are any strand breaks. If there are no strand brakes, it is determined if the end of the rope has been reached (step 123). If "No", the program returns to step 103. If "Yes", the elevator is stopped and the Rope Inspection Mode is ended (step 124). Rope inspection subsequently ends in step 125.

If rope diameter is equal to or smaller than a predetermined threshold D1 (step 103), it is checked if rope diameter is within the range of level 3 (step 104). If it is, three red lines are marked on the rope (step 105) and the program proceeds to step 109. If rope diameter is not within the range of level 3, it is checked if rope diameter is within the range of level 2 (step 106). If it is, two red lines are marked on the rope (step 107) and the program proceeds to step 109. If rope diameter is not within the range of level 2, it is determined that rope diameter corresponds to level 1, one red line is marked on the rope and the program proceeds to step 109.

If there is rust on the rope (step 109), it is checked in step 110 if rust area is within the range of level 3 (step 110). If it is, three yellow lines are marked on the rope (step 111) and the program proceeds to step 115. If rust area is not within the range of level 3, it is checked if rust area is within the range of level 2 (step 112). If it is, two yellow lines are marked on the rope (step 113) and the program proceeds to step 115. If rust area is not within the range of level 2, it is determined that rust area corresponds to level 1, one yellow line is marked on the rope (step 114) and the program proceeds to step 115.

If there is any wire breakage (step 115), it is checked in step 116 if the number of broken wires is within the range of level 3 (step 116). If it is, three blue lines are marked on the rope (step 117) and the program proceeds to step 121. If the number of broken wires is not within the range of level 3, it is checked if the number of broken wires is within the range of level 2 (step 118). If it is, two blue lines are marked on the rope (step 119) and the program proceeds to step 121. If the number of broken wires is not within the range of level 2, it is determined that the number of broken wires corresponds to level 1, one blue line is marked on the rope (step 120) and the program proceeds to step 121.

If there is any strand breakage (step 121), a green tape is wrapped around the rope and the program will proceed to step 123.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. An automatic marking system, comprising:
a rope inspecting device including a camera and an image processor; and
a rope marking device for providing a mark on the rope in response to the image processor detecting a defect on the rope, the mark distinguishing the type or level of the defect.

2. The automatic marking system of claim 1, wherein the rope is a hoisting rope of an elevator device.

3. The automatic marking system of claim 2, wherein the defect includes at least one of reduced diameter, rust, wire brakeage and strand brakeage of the hoisting rope.

4. The automatic marking system of any preceding claim, wherein a different color is used for the mark to distinguish the type of the defect.

5. The automatic marking system of any preceding claim, wherein a different number of markings is used for the mark to distinguish the level of the defect.

6. The automatic marking system of any preceding claim, wherein the rope marking device comprises a spray head including at least one set of nozzles.

7. The automatic marking system of claim 6, wherein the spray head includes a plurality of sets of nozzles, the sets of nozzles longitudinally spaced from one another.

8. The automatic marking system of any preceding claim, further comprising a rope taping device for wrapping a tape around the rope in response to the image processor detecting a defect on the rope.

9. The automatic marking system of claim 8, wherein the rope taping device comprises a taping sleeve with a C-shaped cross section for receiving the rope, the taping sleeve supporting the tape and adapted to rotate about an axis of rotation.

10. The automatic marking system of claim 9, wherein the tape is wrapped around the rope by rotation of the taping sleeve.

11. An automatic marking system, comprising:
a rope inspecting device including a camera and an image processor;
a rope marking device for providing a mark on the rope in response to the image processor detecting at least one of reduced diameter, rust and wire brakeage of the rope, the mark distinguishing the type or level of the defect; and
a rope taping device for wrapping a tape around the rope in response to the image processor detecting strand breakage of the rope.

12. A method for inspecting a hoisting rope of an elevator, comprising:
detecting a defect on the hoisting rope by a rope inspecting device;
sending a detection signal from the rope inspecting device to a rope marking device; and
providing a mark on the rope in response to the detection signal, which mark distinguishes the type or level of the defect.

13. The method of claim 12, wherein the defect includes at least one of reduced diameter, rust, wire brakeage and strand brakeage of the hoisting rope.

14. The method of claim 12 or 13, further comprising:
sending a detection signal from the rope inspecting device to a rope taping device; and
providing a tape on the rope in response to the detection signal.
